# EUROPÄISCHE PATENTANMELDUNG

(11) **EP 3 582 370 A1**
(43) Veröffentlichungstag der Anmeldung: **18.12.2019**
(21) Anmeldenummer: 18177553.7
(22) Anmeldetag: 13.06.2018
(51) Int. Cl.: H02K 1/20

(54) **GESCHICHTETER KÖRPER, ELEKTRISCHE MASCHINE ODER STATOR SOWIE VERFAHREN ZUR HERSTELLUNG EINES GESCHICHTETEN KÖRPERS**

(71) Anmelder: Siemens Aktiengesellschaft, 80333 München (DE)
(72) Erfinder: Schunk, Holger, 97461 Lendershausen (DE); Schwaben, Markus, 97618 Hohenroth-Leutershausen (DE)

(57) **Zusammenfassung**

Die Erfindung betrifft einen geschichteten Körper (3), insbesondere ein Blechpaket, und eine elektrische Maschine mit einem solchen geschichteten Körper (3). Weiter betrifft die Erfindung ein Verfahren zur Herstellung eines solchen geschichteten Körpers (3). Der geschichtete Körper (3) umfasst eine Mehrzahl von Einheiten (4). Die jeweilige Einheit (4) umfasst eine Mehrzahl von Schichten (3a), insbesondere Bleche. Die jeweilige Schicht (3a) umfasst zumindest eine Aussparung (3b). Weiter umfasst die jeweilige Schicht (3a) Öffnungen (3c), welche vorzugsweise im Bereich der jeweiligen Ecke angeordnet sind. Die Aussparungen (3b) der jeweiligen Schicht (3b) der Einheit (4) sind so angeordnet, dass ein Kanal für ein Kühlmedium in tangentialer Richtung (x) der Einheit (4) entsteht. Die Öffnungen (3c) der jeweiligen Schicht (3a) bilden durch die in axialer Richtung (z) angeordneten Schichten (3a) bzw. Einheiten (4) Zulaufkanäle (7) oder Ablaufkanäle (9) zur Versorgung der Kanäle (8) mit einem Kühlmedium. Durch eine jeweils um 90 Grad oder 180 Grad versetzte Anordnung der Einheiten (4) erhält der geschichtete Körper (3) in einfacher Art und Weise eine gleichmäßige Kühlung.

## Beschreibung

Die Erfindung betrifft einen geschichteten Körper sowie einen Stator oder eine elektrische Maschine mit einem solchen geschichteten Körper. Weiter betrifft die Erfindung ein Verfahren zur Herstellung eines geschichteten Körpers.

Statoren weisen in der Regel geschichtete Körper, wie ein Blechpaket, auf. Ein solcher geschichteter Körper weist in der Regel Bleche oder allgemeine Schichten auf, wobei die Schichten oder die Bleche insbesondere zur Führung eines magnetischen Feldes dienen.

Bekannt sind Blechpakete, die Öffnungen zur Kühlung mittels eines Kühlmediums aufweisen. Diese Kühlkanäle sind in der Regel im Jochbereich, insbesondere im Bereich von Ecken des Blechpakets, angeordnet. Die Anordnung der Kühlkanäle im Jochbereich erfolgt aus Gründen der Stabilität. (Kühl-) Kanäle können durch Bleche mit Öffnungen erzeugt werden, wobei die Bleche derart gestapelt sind, dass die Öffnungen im Wesentlichen deckungsgleich aufeinander angeordnet sind und Kanäle bilden. Solche einfachen (Kühl-) Kanäle sind besonders einfach in der Herstellung - jedoch ineffizient in der Kühlleistung, da sie nur am Rand des Jochbereichs angeordnet sind.

Weiter bekannt sind Blechpakete für elektrische Maschinen, die eine Ringmantelkühlung aufweisen. Eine Ringmantelkühlung weist eine gute Kühlleistung auf, ist jedoch aufwendig in der Herstellung.

DE 10 2010 040 399 A1 offenbart ein Gehäuse zur Aufnahme einer elektrischen Maschine mit Kühlkanälen. Nachteilhaft ist eine dort gezeigte elektrische Maschine, welche komplex im Aufbau und aufwendig in der Herstellung ist.

Aufgabe der Erfindung ist es demnach, einen geschichteten Körper bereitzustellen, welcher eine hohe Kühleffizienz aufweist und einfach herstellbar ist.

Diese Aufgabe wird durch einen geschichteten Körper gemäß Anspruch 1 gelöst. Weiter wird die Aufgabe durch ein Verfahren gemäß Anspruch 11 gelöst. Darüber hinaus wird die Aufgabe durch einen Stator oder eine elektrische Maschine mit einem solchen geschichteten Körper gelöst.

Vorteilhafte Ausführungen und Weiterentwicklungen sind jeweils Gegenstand der abhängigen Ansprüche.

Der geschichtete Körper, insbesondere als ein Blechpaket ausgestaltet, umfasst eine Mehrzahl von Einheiten, wobei die jeweilige Einheit jeweils eine Schicht oder eine Mehrzahl von Schichten, insbesondere Bleche, umfasst, die im Wesentlichen deckungsgleich oder deckungsgleich in axialer Richtung aufeinander angeordnet sind,
- wobei die jeweilige Schicht an zumindest einer Seite eine Aussparung aufweist und die Aussparung jeweils zur Verbindung von zwei Öffnungen vorgesehen ist,
- wobei die Aussparungen der Schichten einer Einheit jeweils in tangentialer Richtung einen Kanal bilden,
- wobei die jeweiligen Einheiten so aufeinander angeordnet sind, dass die Öffnungen einen Zulaufkanal und einen Ablaufkanal ausbilden,
- wobei der jeweilige Zuleitungskanal über einen oder mehrere Kanäle mit dem jeweiligen Ableitungskanal verbunden ist, wobei ein Kühlmedium, insbesondere Luft, durch den jeweiligen Zuleitungskanal über den zumindest einen Kanal und durch einen Ableitungskanal strömbar ist.

Der geschichtete Körper ist vorzugsweise als Blechpaket ausgebildet. Die Schichten sind vorzugsweise als Bleche ausgebildet, die ein ferromagnetisches Material umfassen. Vorzugsweise sind die Schichten jeweils aus einem sogenannten Elektroblech gefertigt. Eine Schicht, die als Blech ausgebildet ist, wird vorzugsweise durch Walzen bereitgestellt.

Die Aussparungen und/oder die Öffnungen sind vorzugsweise durch einen Stanzvorgang in die jeweilige Schicht eingebracht.

Alternativ kann die jeweilige Schicht auch durch ein 3D-Druckverfahren hergestellt sein. Vorteilhaft können die Struktur und/oder das Material der Schicht so ausgebildet sein, dass ein Magnetfeld optimiert durch die Schicht geführt ist.

Die Aussparung verbindet in der Regel zwei Öffnungen. Die jeweilige Schicht umfasst vorzugsweise vier Öffnungen. Die Öffnungen sind vorzugsweis bei einer viereckigen, vorzugsweise quadratischen oder im Wesentlichen quadratischen, Schicht im Bereich der jeweiligen Ecke der Schicht angeordnet. Vorzugsweise ist der jeweilige Rand der jeweiligen Öffnung einige Millimeter von der jeweiligen Seite der Schicht angeordnet.

Wenn die Schicht eine Aussparung an einer Seite aufweist, verbindet die Aussparung zwei Öffnungen. Die weiteren beiden Öffnungen sind vorteilhaft ohne Verbindung zu der jeweiligen Aussparung der Schicht ausgebildet.

Die Öffnungen sind vorzugsweise derart angeordnet, dass bei in axialer Richtung angeordneten Schichten bzw. Einheiten die Öffnungen den jeweiligen Zulaufkanal oder den jeweiligen Ablaufkanal jeweils in axialer Richtung ausbilden.

Vorzugsweise ist die jeweilige Aussparung an einer Seite der Aussparung mit jeweils einer Öffnung verbunden.

Das Kühlmedium ist vorzugsweise Luft. Alternativ kann das Kühlmedium auch ein anderes Gas, Wasser, ein Mineralöl oder eine sonstige geeignete Flüssigkeit sein.

Das Kühlmedium wird vorzugsweise durch den Zulaufkanal auf die einzelnen Kanäle aufgeteilt. Die Kanäle verlaufen jeweils beabstandet in tangentialer Richtung. Die Kanäle sind parallel zu einer Seite des geschichteten Körpers angeordnet. Die Kanäle münden jeweils in den Ablaufkanal. Das Kühlmedium strömt demnach durch den Zulaufkanal, dann durch die jeweiligen Kanäle und schließlich durch den Ablaufkanal. Der Verlauf des Kühlmediums wird hier als Flussrichtung bezeichnet.

Die Kanäle sind in tangentialer Richtung jeweils von einer Einheit bzw. von einer Mehrzahl von Schichten umfasst. Die Schichten oder Einheiten, welche den Kanal in axialer Richtung begrenzen, weisen auf der jeweiligen Seite, bei der die dazwischenliegende Einheit den Kanal aufweist, keine Aussparung bzw. keinen Kanal auf, so dass der Kanal jeweils von einer Schicht seitlich begrenzt ist. Somit kühlt das durch den Kanal strömende Kühlmedium sowohl eine Kühlfläche als auch eine Seite der angrenzenden Einheit von der Seite.

Durch die Verbindung der jeweiligen Öffnung und der Aussparung ist ein Fluss des Kühlmediums von der jeweiligen Öffnung durch die Aussparung hindurch möglich.

Vorzugsweise weist ein hier beschriebener geschichteter Körper zwei Zulaufkanäle und zwei Ablaufkanäle auf, die jeweils gegenüberliegend angeordnet sind. Die Zulaufkanäle und Ablaufkanäle verlaufen jeweils in axialer Richtung im Wesentlichen parallel.

Bei zwei Zulaufkanälen teilt sich das Kühlmedium von einem ersten und von einem zweiten Zulaufkanal jeweils auf die Mehrzahl der Kanäle auf. Die Kanäle münden in den jeweiligen Ablaufkanal. Die Kanäle sind über die Seiten in axialer Richtung des geschichteten Körpers verteilt. Durch die Anordnung der Kanäle über die Seiten des geschichteten Körpers und in axialer Richtung erfolgt eine besonders gleichmäßige Kühlung des geschichteten Körpers.

Eine Einheit umfasst eine Mehrzahl von Schichten, die im Wesentlichen deckungsgleich aufeinander angeordnet sind. Die Einheit umfasst vorzugsweise fünf bis zwanzig Schichten. Die Schichten der Einheiten können untereinander verbunden sein.

Im Wesentlichen deckungsgleich bedeutet, dass die Schichten, welche die gleiche Fläche aufweisen, so in axialer Richtung angeordnet sind, dass die Öffnungen jeweils einen Ablaufkanal oder einen Zulaufkanal ausbilden.

Die Schichten sind vorzugsweise aus einem Blech, insbesondere aus einem sogenannten Elektroblech, ausgestanzt. Das Blech ist vorzugsweise auf den jeweilig zusammenliegenden Flächen isoliert.

Insbesondere Bleche werden meist gewalzt. Durch den Walzvorgang bedingt weisen Bleche oft eine leicht unterschiedliche Dicke an den gegenüberliegenden Seiten auf.

Aufgrund dessen würde bei einem einfachen aufeinanderstapeln der Schichten der geschichtete Körper einen leichten Bogen ausbilden.

Mit der um 90 Grad oder 180 Grad versetzt erfolgende Anordnung der Schichten kann die Bildung des Bogens verhindert werden.

Da eine solche Schichtung hier erfolgt, ist der Ausgleich des leichten Bogens ein weiterer Vorteil der Erfindung.

Bei einer vorteilhaften Ausgestaltung der Erfindung sind die Einheiten jeweils um 90 Grad zueinander versetzt. Die Einheiten sind in axialer Richtung angeordnet.

Bei Schichten mit einer Aussparung sind die Einheiten in axialer Richtung so angeordnet, dass die durch die Aussparungen der jeweiligen Schicht entstehenden Kanäle Wendeltreppenförmig über die Seiten des geschichteten Körpers angeordnet sind. Die Treppen-Form ergibt sich insbesondere bei einer um 90 Grad versetzten Anordnung der Einheiten in axialer Richtung.

Bei Schichten mit zwei Aussparungen, die insbesondere auf sich gegenüberliegenden Seiten der jeweiligen Schicht angeordnet sind, sind die Einheiten vorzugsweise so in axialer Richtung aufeinander angeordnet, dass jeweils der Kanal von beiden Seiten mit einer Einheit beaufschlagt wird, die auf der Seite keine Aussparung aufweisen.

Durch die Anordnung der Einheiten mit einer Versetzung kann der Ausgleich der jeweiligen Schichtdicken erfolgen. Weiter kann eine besonders einfache Herstellung des geschichteten Körpers erfolgen.

Bei einer weiteren vorteilhaften Ausgestaltung der Erfindung bildet eine Innenseite der Aussparung der jeweiligen Schicht der jeweiligen Einheit eine Kühlfläche aus.

Die Kühlfläche wird durch einen axial verlaufenden und einen tangential verlaufenden Vektor aufgespannt. Der Kanal wird seitlich von den jeweils in axialer Richtung angeordneten Einheiten oder Schichten begrenzt. Die Kühlfläche ist zu der Begrenzung orthogonal angeordnet. Bei einem geschichteten Körper für einen Stator einer elektrischen Maschine ist die jeweilige Kühlfläche diejenige Fläche der Kanäle, die stellenweise parallel zu der Öffnung für den Rotor verläuft.

Die Innenseite der Aussparung der jeweiligen Schicht ist in der Einheit aufeinander angeordnet. Durch die aufeinander angeordneten Schichten bilden die jeweiligen Innenseiten der Aussparungen die Kühlfläche aus. Die Kühlfläche ist die zusammengefasste tangentialverlaufende Fläche der Aussparungen. Die Breite der Kühlflächen ist durch die Anzahl von Schichten, deren Dicke und/oder durch die Anzahl der deckungsgleich aufeinander gestapelten Einheiten, bestimmt.

Die Kühlfläche ist vorzugsweise so ausgebildet, dass die entstehende Wärme von stromdurchflossenen Wicklungen, die in dem geschichteten Körper angeordnet sind, gleichmäßig abgeführt wird.

Bei einer weiteren vorteilhaften Ausgestaltung der Erfindung ist die zumindest eine Kühlfläche eine Kühlrippe umfasst.

Die Kühlrippe kann durch einzelne, bereichsweise hervorstehende Schichten in der jeweiligen Einheit ausgebildet sein. Diese Schichten weisen entsprechend eine Aussparung mit einer kleineren Fläche auf. Eine Kühlrippe kann auch nachträglich auf die Kühlfläche aufgebracht sein.

Die Kühlrippe kann mit Hilfe von 3D-Druck auf die Kühlfläche aufgebracht werden.

Durch die Kühlrippe wird die Kontaktfläche zwischen dem Kühlmedium und der Oberfläche des Kanals vergrößert. Die Vergrößerung der Kontaktfläche führt zu einer verbesserten Kühlung des geschichteten Körpers.

Vorzugsweise ist die Kühlrippe in Flussrichtung des Kühlmediums ausgerichtet. Alternativ oder zusätzlich kann die Kühlrippe so geformt sein, dass sie Wirbel in der Flussrichtung des Kühlmediums hervorruft. Durch die Wirbel im Kühlmedium kann die Kühlleistung verbessert werden.

Bei einer weiteren vorteilhaften Ausgestaltung der Erfindung ist die jeweilige Aussparung in der Mitte verengt.

Die Verengung der Aussparung ist in tangentialer Richtung ausgebildet. Alternativ oder zusätzlich kann die Aussparung auch in axialer Richtung verengt sein.

Die Form der Aussparung ist insbesondere rundbogenförmig parallel in tangentialer Richtung ausgebildet. Durch die Verengung kann, insbesondere bei einem geschichteten Körper, für einen Stator einer elektrischen Maschine die Kühlung der Wicklungen besonders gleichmäßig gestaltet werden.

Bei einer weiteren vorteilhaften Ausgestaltung der Erfindung ist der Zulaufkanal bereichsweise in Strömungsrichtung verjüngt ausgebildet.

Der Zulaufkanal ist insbesondere in Flussrichtung des Kühlmediums verjüngt oder zunehmend verengt ausgebildet. Unter einer verjüngenden Ausbildung des Zulaufkanals wird ein stetig abnehmender Querschnitt der Querschnittfläche des Zulaufkanals verstanden.

Zur Verengung dient vorzugsweise eine Umlenkvorrichtung, die im dem Zulaufkanal angeordnet ist. Eine solche Umlenkvorrichtung weist vorzugsweise eine Dreieck-förmige Querschnittsfläche in Flussrichtung des Kühlmediums auf.

Die Umlenkvorrichtung wird in dem Zulaufkanal vorzugsweise befestigt.

Durch die bereichsweise Verengung des Zulaufkanals oder der Bereiche des Kanals kann vorzugsweise eine Flussgeschwindigkeit des Kühlmediums angepasst werden.

Bei einer weiteren vorteilhaften Ausgestaltung der Erfindung ist die Oberfläche der Kühlfläche mit Hilfe einer Kühlstruktur vergrößert.

Die Vergrößerung der Oberfläche der Kühlfläche erfolgt beispielhaft durch das Beaufschlagen der Kühlfläche mit einer Kühlstruktur. Die Kühlstruktur kann mit Hilfe eines 3D-Druck-Verfahrens auf die Kühlfläche aufgebracht werden.

Durch die Vergrößerung der Oberfläche der Kühlfläche wird die Kühlung des geschichteten Körpers verbessert.

Bei einer weiteren vorteilhaften Ausgestaltung der Erfindung ist die jeweilige Aussparung zumindest teilweise von einer Seite der Schicht zugänglich.

Zugänglich heißt, dass der Kanal jeweils von der Außenseite des geschichteten Körpers zugänglich ist. Beim Durchströmen des Kühlmediums ist der jeweilige Kanal vorzugsweise durch eine Hülle nach außen abgegrenzt. Die Hülle ist vorzugsweise die Metall-Hülle der elektrischen Maschine, in die der geschichtete Körper eingeführt ist.

Die Aussparung kann auch vollständig im Inneren des Bleches angeordnet sein. In diesem Fall ist der jeweilige Kanal von der Außenseite des geschichteten Körpers nicht sichtbar.

Durch von außen zugängliche Kanäle kann Kühlmedium direkt von einer Außenseite der Hülle dem Kanal zugeführt werden oder aus dem Kanal abgeführt werden. Insbesondere ist der Kanal nach Entfernen der Hülle von außen zugänglich, z.B. zur Reinigung.

Bei einer weiteren vorteilhaften Ausgestaltung der Erfindung ist der geschichtete Körper zumindest bereichsweise, mit einer Hülle beaufschlagt.

Die Hülle dient zur Umhüllung des geschichteten Körpers. Die Hülle ist vorzugsweise um den geschichteten Körper geführt. Eine Befestigung der Hülle mit dem geschichteten Körpers erfolgt vorzugsweise mit Hilfe einer Pressverbindung.

Durch von außen zugängliche Kanäle kann Kühlmedium direkt von einer Außenseite der Hülle dem Kanal zugeführt werden oder aus dem Kanal abgeführt werden. Insbesondere ist der Kanal nach Entfernen der Hülle von außen zugänglich, z.B. zur Reinigung.

Bei einer weiteren vorteilhaften Ausgestaltung der Erfindung ist zumindest eine Schicht durch ein 3D-Druckverfahren bereitgestellt.

Die Schicht kann durch bekannte 3D-Druck-Verfahren, insbesondere durch ein Fused-Deposition-Modelling-Verfahren (FDM-Verfahren) oder durch ein Pulverbett-Verfahren, bereitgestellt werden.

Durch die Verwendung eines 3D-Duck-Verfahrens kann eine magnetische Struktur und/oder die Festigkeit der Schicht den Erfordernissen besser angepasst werden. Darüber hinaus kann eine verbesserte Genauigkeit der Dicke der Schicht im Vergleich zu einem gewalzten Blech erreicht werden.

Bei dem Verfahren zur Herstellung eines geschichteten Körpers umfasst der geschichtete Körper eine Mehrzahl von Schichten, wobei die jeweilige Schicht jeweils zumindest eine Aussparung und zumindest zwei Öffnungen aufweist und die Aussparung die jeweiligen Öffnungen verbindet, wobei eine Mehrzahl von deckungsgleich (oder im Wesentlichen deckungsgleich) in axialer Richtung aufeinander angeordneten Schichten jeweils eine Einheit bilden, wobei die Einheiten so in axialer Richtung aufeinander angeordnet werden, dass die Aussparungen der jeweiligen Einheit um 90 Grad oder um 180 Grad in Bezug zur benachbarten Einheit versetzt angeordnet sind.

Die Mehrzahl der Einheiten bildet den geschichteten Körper.

Vorzugsweise sind die Schichten im Wesentlichen quadratisch ausgeführt. Die Aussparungen sind vorzugsweise seitlich angeordnete Ausnehmungen der jeweiligen Schicht. Die Öffnungen sind jeweils vorzugsweise in den Ecken angeordnet.

Obgleich die hier beschriebenen Ausführungen für quadratisch geschichtete Körper beschrieben sind, kann der geschichtete Körper im Profil auch fünfeckig, sechseckig oder mehreckig geformt sein.

Bei der Herstellung werden vorzugsweise Einheiten, jeweils eine Mehrzahl von Schichten, in axialer Richtung aufeinander angeordnet. Die Schichten sind vorzugsweise im Wesentlichen quadratisch ausgebildet. Die Einheiten werden derart aufeinander angeordnet, dass die Aussparung der einen Einheit auf einer anderen Seite wie die jeweilige Aussparung der benachbarten Einheit positioniert ist. Bei Schichten mit zwei Aussparungen, die auf der gegenüberliegenden Seite angeordnet sind, kann dies durch Versetzen um 90 Grad erfolgen.

Die Einheiten oder die Schichten werden dann mit einer Klemmverbindung, einer Klebeverbindung oder einer Schweißverbindung miteinander befestigt.

Mit dem Herstellungsverfahren kann insbesondere ein Blechpaket einer elektrischen Maschine oder ein Blechpaket für einen Transformator gefertigt werden.

Zur Befestigung der Schichten oder der Einheiten miteinander kann auch die Hülle dienen, wobei die Hülle auch zur Abdeckung von Aussparungen dient.

Der geschichtete Körper weist vorzugsweise Nuten zur Aufnahme von Wicklungen auf.

Zur verbesserten Aufteilung des Kühlmediums kann der Zulaufkanal in Flussrichtung des Kühlmediums zunehmend, in der Querschnittfläche abnehmend ausgebildet sein und/oder der Ablaufkanal in Flussrichtung zunehmend in der Querschnittfläche ausgebildet sein.

Die Abnahme und/oder die Zunahme können durch zunehmende und/oder abnehmende Querschnittsflächen der aufeinander angeordneten Schichten ausgebildet sein.

Vorteilhaft erfolgt die Zunahme oder Abnahme der jeweiligen Querschnittsfläche durch einen Einsatz, der in die jeweilige Öffnung eingepasst wird.

Zur Verminderung oder Abnahme der Querschnittsfläche nimmt der Einsatz in seiner Querschnittsfläche in Flussrichtung des Kühlmediums zu. Der Einsatz wird vorzugsweise in die Öffnung bzw. in den Zulaufkanal eingeführt und mit einer Klemmverbindung oder einer Klebeverbindung in dem Zulaufkanal befestigt.

Zur Vergrößerung oder Zunahme der Querschnittsfläche nimmt der Einsatz in seiner Querschnittsfläche in Flussrichtung des Kühlmediums ab. Der Einsatz wird vorzugsweise in die Öffnung bzw. in den Ablaufkanal eingeführt und mit einer Klemmverbindung oder einer Klebeverbindung in dem Ablaufkanal befestigt.

Durch das vorstehend beschriebene Verfahren kann ein geschichteter Körper schnell und einfach hergestellt werden. Überdies ist ein solches Herstellungsverfahren einfach automatisierbar.

Ein vorteilhafter Einsatz eines hier beschriebenen geschichteten Körpers ist eine elektrische Maschine oder Stator einer elektrischen Maschine.

Der hier beschriebene geschichtete Körper ist vorzugsweise als Blechpaket ausgebildet. Der geschichtete Körper bildet vorzugsweise eine Grundlage für einen Stator einer elektrischen Maschine. Durch die verbesserte Kühlung kann ein solcher Motor insbesondere in elektrisch betriebenen Fahrzeugen eingesetzt werden.

Im Folgenden wird die Erfindung anhand von Figuren näher beschrieben und erläutert. Die in den Figuren gezeigten Merkmale können zu neuen Ausführungen der Erfindung kombiniert werden. Die in den Figuren gezeigten Ausführungsformen sind lediglich beispielhaft und schränken die Erfindung nicht ein.

Es zeigen:
- FIG 1: einen beispielhaften geschichteten Körper
- FIG 2: eine schematische Darstellung des geschichteten Körpers,
- FIG 3: eine weitere schematische Darstellung,
- FIG 4: eine mögliche Form einer Schicht,
- FIG 5: eine weitere mögliche Form einer Schicht,
- FIG 6: eine mögliche Einheit,
- FIG 7: ein möglicher Verlauf eines Kühlmediums.

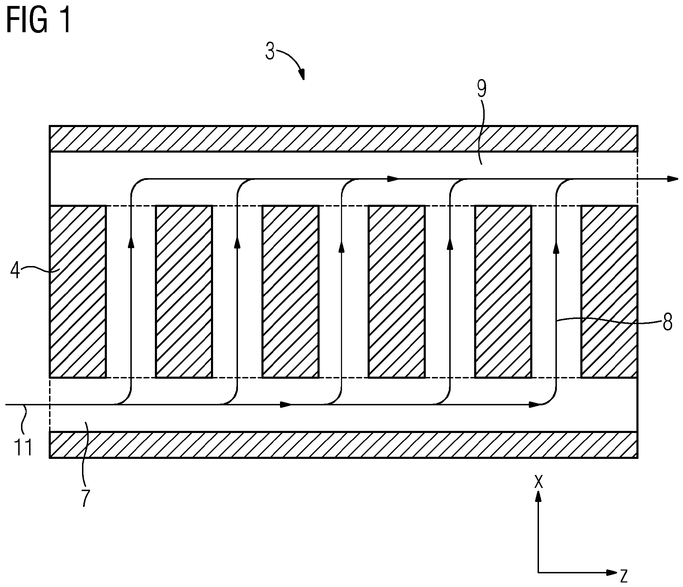

FIG 1 zeigt einen beispielhaften geschichteten Körper 3. Der geschichtete Körper 3 umfasst eine Mehrheit von Einheiten 4, die in axialer Richtung z aufeinander angeordnet sind. Aussparungen 3b und Öffnungen 3c von Schichten 3a bilden in dem geschichteten Körper 3 einen Zulaufkanal 7, einen Ablaufkanal 9 und eine Mehrzahl von Kanälen 8. Der Zulaufkanal 7 dient zur Aufnahme von einem Kühlmedium, wobei der Zulaufkanal 7 das Kühlmedium auf mehrere Kanäle 8 verteilt. Die Kanäle 8 münden sämtlich in den Ablaufkanal 9. Die Flussrichtung 11 des Kühlmediums ist durch Pfeile dargestellt. Ein geschichteter Körper 3 weißt in der Regel zwei Zulaufkanäle 7 und zwei Ablaufkanäle 9 auf, wobei hier nur eine Seite des geschichteten Körpers gezeigt ist. Das Kühlmedium verläuft in den Kanälen in tangentialer Richtung x.

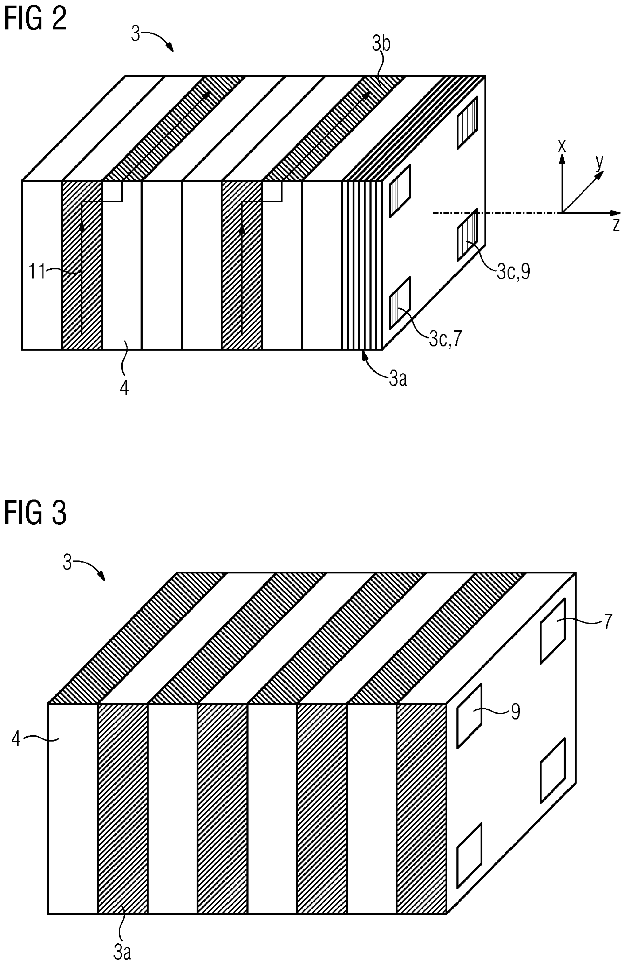

FIG 2 zeigt eine schematische Darstellung eines geschichteten Körpers 3. Der geschichtete Körper 3 weist eine Mehrzahl von Einheiten 4 auf. Die Einheiten 4 wiederum umfassen eine Mehrzahl von Schichten 3a. Die jeweilige Schicht 3a weist jeweils Öffnungen 3c auf, wobei die Öffnungen 3c hier jeweils an einer Ecke der Schicht 3a angeordnet sind. Die Öffnungen 3c bilden den Zulaufkanal 7 oder den Ablaufkanal 9. Die Bezugsweichen für den Ablaufkanal 9 und den Zulaufkanal 7 sind in den Figuren 2 und 3 rein symbolisch zu verstehen. Die Aussparungen 3b in den Schichten bilden die Kanäle 8, wobei die Kanäle 8 durch eine Schraffur der jeweiligen Einheit 4 symbolisiert sind. Die eine mögliche Flussrichtung 11 des Kühlmediums ist durch Pfeile angedeutet. Die hier gezeigte Darstellung des geschichteten Körpers 3 zeichnet sich dadurch aus, dass die jeweilige Schicht 3a lediglich eine Aussparung 3b umfasst. Aus den Aussparungen 3b entstehen die Kanäle 8. Die Kanäle und somit die Einheiten 4 sind jeweils um 90 Grad versetzt zueinander angeordnet.

FIG 3 zeigt eine weitere schematische Darstellung eines geschichteten Körpers 3. Der hier gezeigte geschichtete Körper 3 zeigt mehr Kanäle 8, die durch Aussparungen in den aufeinander angeordneten Schichten 3a ausgebildet werden. Die Aussparungen 3b, der jeweiligen Schicht 3a, ergibt den Kanal 8. Der Kanal 8 ist hier durch eine Schraffur an einer Seite der jeweiligen Einheit 4 symbolisiert dargestellt. Weiter gezeigt sind jeweils ein Zulaufkanal 7 und ein Ablaufkanal 9. Der Zulaufkanal 7 und der Ablaufkanal 9 sind von dem Profil des geschichteten Körpers 3 zugänglich. Der Zulaufkanal 7 und der Ablaufkanal 9 dienen zur Verbindung der jeweiligen Kanäle 8.

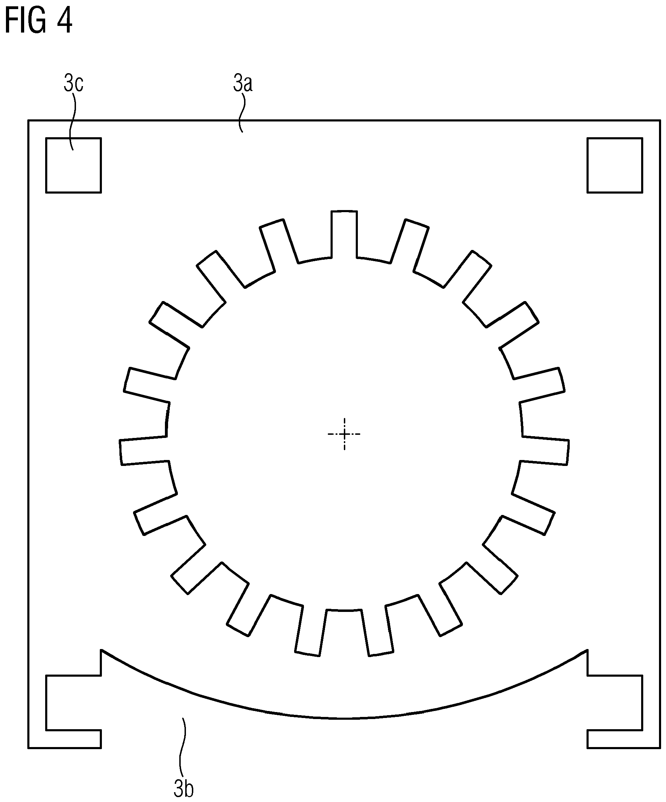

FIG 4 zeigt die mögliche Form einer Schicht 3a. Die Schicht 3a kann durch ein Blech 3a ausgebildet sein. Die Schicht 3a weist an einer Seite eine Aussparung 3b auf, wobei die Aussparung 3b jeweils zwei Öffnungen 3c miteinander verbindet. Weitere Öffnungen 3c sind auf der gegenüberliegenden Seite der Aussparung 3b angeordnet. Die Schicht 3a weist weiter in der Mitte ein großes Loch auf, welches an der Seite mit Nuten versehen ist. Das Loch dient in der Anwendung für eine elektrische Maschine zur Aufnahme eines Rotors.

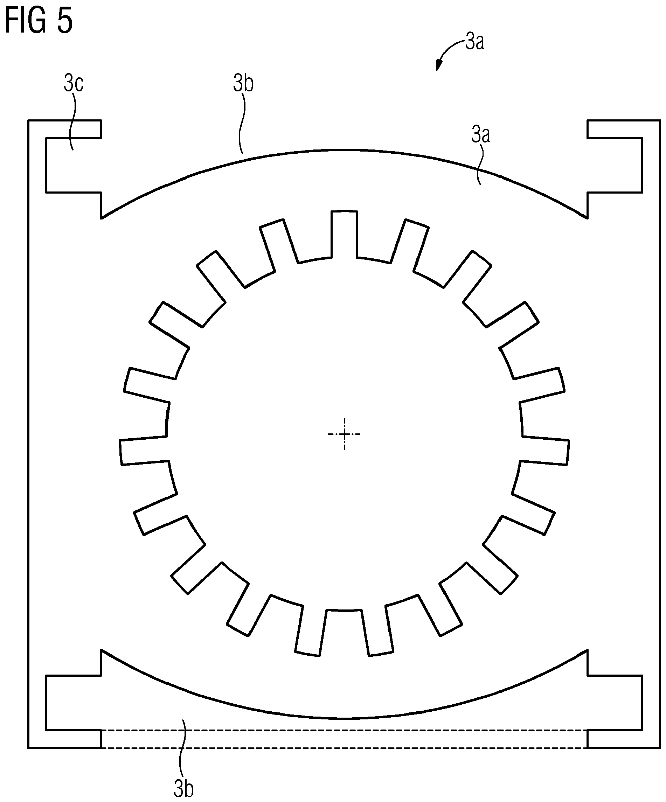

FIG 5 zeigt eine weitere mögliche Form einer Schicht 3a. Die Schicht 3a weist an den gegenüberliegenden Seiten jeweils eine Aussparung 3b auf. Die Aussparung 3b verbindet jeweils Öffnungen 3c, wobei die Öffnungen 3c nach dem zusammensetzen des geschichteten Körpers 3 aus der Vielzahl von Schichten 3a die Zulauf- und Ablaufkanäle für das Kühlmedium darstellen. An der Unterseite der Figur ist in gestrichelter Art und Weise eine Abdeckung der Aussparung gezeigt. Dies soll symbolisieren, dass die Aussparung auch zum Teil im Inneren der Schicht 3a positioniert sein kann. Die jeweilige Aussparung 3b ist um das Loch in der Mitte der Schicht 3a angeordnet. Das durch die Aussparung fließende Kühlmedium dient zur Aufnahme von Wärme, welche durch Wicklungen, die in dem Loch bzw. in den Nuten des Lochs angeordnet sind, entsteht.

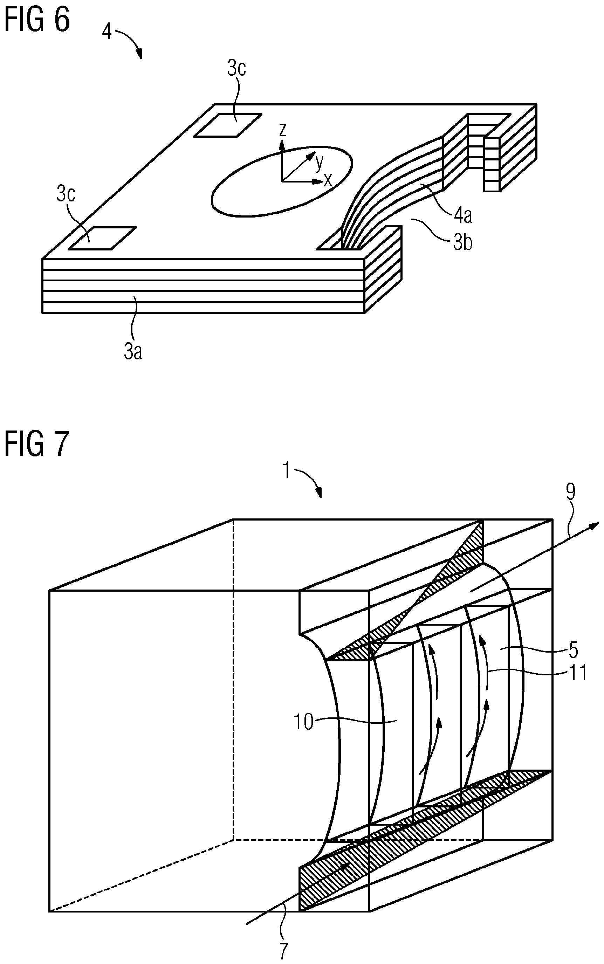

FIG 6 zeigt eine mögliche Einheit 4. Die Einheit 4 umfasst eine Mehrzahl von Schichten 3a. Die Schichten 3a sind aufeinander in axialer Richtung z im Wesentlichen deckungsgleich angeordnet. Die jeweilige Schicht 3a weist im Bereich ihrer jeweiligen Ecken eine Öffnung 3c auf. Weiter weist die jeweilige Schicht 3a eine Aussparung 3b an einer Seite auf. Die aufeinander angeordneten Aussparungen 3b bilden den Kanal 8. Der Kanal 8 verbindet jeweils den Zulaufkanal 7 und den Ablaufkanal 9. Ein geschichteter Körper 3 umfasst eine Mehrzahl solcher Einheiten 4, wobei die jeweilige Einheit um 90 Grad bzw. 180 Grad versetzt in axialer Richtung z aufeinander angeordnet ist. Die Innenseiten der Aussparung 3b der jeweiligen Schicht 3a bilden eine Kühlfläche 4a aus. Die Kühlfläche 4a dient zur Abgabe von Wärme an das Kühlmedium, welches entlang der Kühlfläche 4a strömt.

FIG 7 zeigt einen möglichen Verlauf eines Kühlmediums. Das Kühlmedium wird durch den Zulaufkanal 7 in den geschichteten Körper 3 eingebracht. Das Kühlmedium durchläuft den Zulaufkanal 7, teilt sich in die verschiedenen Kanäle 8 und wird in dem Ablaufkanal 9 wieder gesammelt. Das Kühlmedium wird seitlich von einer Kühlrippe 10 begrenzt. Die Kühlrippe 10 dient zur Vergrößerung der Fläche der Kühlfläche. Durch Einsätze bzw. durch die verengend ausgebildete Form des Zulaufkanals wird das Kühlmedium auf die unterschiedlichen Kanäle verteilt.

Zusammenfassend betrifft die Erfindung einen geschichteten Körper, insbesondere ein Blechpaket sowie eine elektrische Maschine mit einem solchen geschichteten Körper 3. Weiter betrifft die Erfindung ein Verfahren zur Herstellung eines solchen geschichteten Körpers 3. Der geschichtete Körper 3 umfasst eine Mehrzahl von Einheiten 4. Die jeweilige Einheit 4 umfasst eine Mehrzahl von Schichten 3a, insbesondere Bleche. Die jeweilige Schicht 3a umfasst zumindest eine Aussparung 3b. Weiter umfasst die jeweilige Schicht 3a Öffnungen 3c, welche vorzugsweise im Bereich der jeweiligen Ecke angeordnet sind. Die Aussparungen 3b der jeweiligen Schicht 3b der Einheit 4 sind so angeordnet, dass ein Kanal 8 für ein Kühlmedium in tangentialer Richtung der Einheit 4 entsteht. Die Öffnungen 3c der jeweiligen Schicht 3a bilden durch die in axialer Richtung z angeordneten Schichten 3a bzw. Einheiten 4 Zulaufkanäle 7 oder Ablaufkanäle 9 zur Versorgung der Kanäle 8 mit einem Kühlmedium. Durch eine jeweils um 90 Grad oder 180 Grad versetzte Anordnung der Einheiten 4 erhält der geschichtete Körper 3 in einfacher Art und Weise eine gleichmäße Kühlung.

## Patentansprüche

1. Geschichteter Körper (3), insbesondere ein Blechpaket, wobei der geschichtete Körper (3) eine Mehrzahl von Einheiten (4) umfasst, wobei die jeweilige Einheit (4) jeweils eine Schicht (3a) oder eine Mehrzahl von Schichten (3a), insbesondere Bleche, umfasst, die im Wesentlichen deckungsgleich in axialer Richtung (z) aufeinander angeordnet sind,
- wobei die jeweilige Schicht (3a) an zumindest einer Seite eine Aussparung (3b) aufweist und die Aussparung (3b) jeweils zur Verbindung von zwei Öffnungen (3c) vorgesehen ist,
- wobei die Aussparung (3b) der Schichten (3a) einer Einheit (4) jeweils in tangentialer Richtung (x, y) einen Kanal (8) bilden,
- wobei die jeweiligen Einheiten (4) so aufeinander angeordnet sind, dass die Öffnungen (3c) einen Zulaufkanal (7) und einen Ablaufkanal (9) ausbilden,
- wobei der jeweilige Zulaufkanal (7) über einen oder mehrere Kanäle (8) mit dem jeweiligen Ablaufkanal (9) verbunden ist, wobei ein Kühlmedium, insbesondere Luft, durch den jeweiligen Zulaufkanal (7) über den zumindest einen Kanal (8) und durch einen Ablaufkanal (9) strömbar ist.

2. Geschichteter Körper (3) nach Anspruch 1, wobei die Einheiten (4) jeweils um 90 Grad zueinander versetzt sind und in axialer Richtung (z) angeordnet sind.

3. Geschichteter Körper (3) nach Anspruch 1, wobei eine Innenseite der Aussparung (3b) der jeweiligen Schicht (3a) der jeweiligen Einheit (4) eine Kühlfläche (4a) ausbildet.

4. Geschichteter Körper (3) nach Anspruch 3, wobei die zumindest eine Kühlfläche (4a) eine Kühlrippe (5) umfasst.

5. Geschichteter Körper (3) nach einem der vorangehenden Ansprüche, wobei die jeweilige Aussparung (3b) in der Mitte verengt ist.

6. Geschichteter Körper (3) nach einem der vorangehenden Ansprüche, wobei der Zulaufkanal (7) sich in Strömungsrichtung verjüngend ausgebildet ist.

7. Geschichteter Körper (3) insbesondere nach Anspruch 3, wobei mit Hilfe eines 3D-Druck-Verfahrens die Oberfläche der Kühlfläche (4a) vergrößert ist.

8. Geschichteter Körper (3) nach einem der vorangehenden Ansprüche, wobei die jeweilige Aussparung (3b) zumindest teilweise von einer Seite der Schicht (3a) zugänglich ist.

9. Geschichteter Körper (3) nach zumindest Anspruch 8, wobei der geschichtete Körper (3) zumindest bereichsweise, insbesondere zur Abdeckung der zugänglichen Bereiche der Aussparungen (3b), mit einer Hülle bedeckt ist.

10. Geschichteter Körper (3) nach einem der vorangehenden Ansprüche, wobei zumindest eine der Schichten (3a) oder eine der Einheiten (4) durch ein 3D-Druckverfahren bereitgestellt ist.

11. Verfahren zur Herstellung eines geschichteten Körpers (3), insbesondere eines Blechpakets einer elektrischen Maschine, wobei der geschichtete Körper (3) eine Mehrzahl von Schichten (3a) umfasst, wobei die jeweilige Schicht jeweils zumindest eine Aussparung (3b) und zumindest zwei Öffnungen (3c) aufweist und die Aussparung (3b) die jeweiligen Öffnungen (3c) verbindet, wobei eine Mehrzahl von deckungsgleich in axialer Richtung (z) aufeinander angeordneten Schichten (3) jeweils eine Einheit (4) bilden, wobei die Einheiten (4) so in axialer Richtung (z) aufeinander angeordnet werden, dass die Aussparungen (3b) der jeweiligen Einheit (4) um 90 Grad oder um 180 Grad in Bezug zur benachbarten Einheit (4) versetzt angeordnet sind, so dass die Mehrzahl der Einheiten (4) den geschichteten Körper (3) bilden.

12. Elektrische Maschine oder Stator (1), aufweisend einen geschichteten Körper (3) nach einem der Ansprüche 1 bis 10.
